# EUROPEAN PATENT APPLICATION

(11) **EP 1 795 659 A1**
(43) Date of publication of application: **13.06.2007**
(21) Application number: 06256267.3
(22) Date of filing: 08.12.2006
(51) Int. Cl.: E03C 1/02, E03C 1/04

(54) **Mounting assembly for plumbing fitting**

(30) Priority: 09.12.2005 GB 0525070
(71) Applicant: Trickett, Robert, Sutton Bonnington Loughborough Leicestershire LE12 5PD (GB)
(72) Inventor: Trickett, Robert, Sutton Bonnington Loughborough Leicestershire LE12 5PD (GB)
(74) Representative: Marshall, Caroline

(57) **Abstract**

In the field of plumbing there is a need for an apparatus that simplifies the installation of a plumbing fitting prior to connection to a plumbing fixture.

A plumbing apparatus (10) comprises a template (12) that is adapted for securance to a support (16) and a plumbing fitting (14) which includes a fitting body (22) having a first end (24) for connection to a plumbing fixture and a second end (26) opposite thereto for connection to a plumbing pipe (28).

The template (12) includes a plumbing fitting location site (18) for locating a plumbing fitting (14) laterally relative to the support (16). The fitting body (22) is insertable through the plumbing fitting location site (18) so as to protrude from respective first and second sides of the template (12). One of the second end (26) of the plumbing fitting and the plumbing fitting location site (18) include a biasing member (36) which is engagable with the other of the second end (26) of the plumbing fitting and the plumbing fitting location site (18) when the plumbing fitting (14) is inserted in the plumbing fitting location site (18) so as to urge the first end (24) of the plumbing fitting (14) towards the template (12), whereby a user is able to adjust the extent to which the first end (24) protrudes from the template (12).

## Description

The present invention relates, in particular but not exclusively, to a plumbing apparatus, a plumbing fitting and a template.

Typically a plumbing fixture, e.g. a shower mixer tap is connected to a plumbing pipe via a plumbing fitting.

The normal procedure when mounting the plumbing fixture to a support such as stud wall involves first mounting one or more plumbing fittings having plumbing pipes connected thereto so that the or each plumbing fitting is accurately located relative to the support.

Usually such positioning is done to ensure that the or each plumbing fitting is accurately positioned relative to the desired location of a respective connector on the plumbing fixture, and that the or each plumbing fitting protrudes to a desired extent relative to the support, so as to allow connection to the respective connector. This can be particularly difficult if the wall is uneven and/or is made from poor brickwork.

Furthermore, after mounting the or each plumbing fitting, the support is then covered with a surfacing material selected from one or more of the following: plasterboard; a layer of plaster; and tiles.

Unfortunately when such surfacing materials are applied it is not unusual for the lateral position of the plumbing fittings to be accidentally altered. Subsequently, after completion of the surfacing process re-adjustment of the lateral position of the or each plumbing fitting might be required. Such re-adjustment can cause damage to the surfacing material, requiring in severe cases replacement of the surfacing material. In addition, the extent to which a given plumbing fixture protrudes relative to the support may also be altered.

A general aim of the invention is to simplify the installation of a plumbing fitting prior to connection to a plumbing fixture.

According to a first aspect of the invention there is provided a plumbing apparatus comprising:
a template adapted for securance to a support; and
a plumbing fitting including a fitting body having a first end for connection to a plumbing fixture and a second end opposite thereto for connection to a plumbing pipe,
the template including a plumbing fitting location site for locating a plumbing fitting laterally relative to the support;
the fitting body being insertable through the plumbing fitting location site so as to protrude from respective first and second sides of the template; and
one of the second end of the plumbing fitting and the plumbing fitting location site including a biasing member which is engagable with the other of the second end of the plumbing fitting and the plumbing fitting location site when the plumbing fitting is inserted in the plumbing fitting location site so as to urge the first end of the plumbing fitting towards the template, whereby a user is able to adjust the extent to which the first end protrudes from the template.

Preferably the position of the biasing member relative to the second end of the fitting is adjustable.

Conveniently the fitting body has a smooth exterior surface.

Optionally at least one of the first or second end of the plumbing fitting is threaded.

In a preferred embodiment of the invention the biasing member has a substantially u-shaped cross-sectional profile.

According to a second aspect of the invention there is provided a plumbing fitting comprising a fitting body having a first end for connection to a plumbing fixture and a second end opposite thereto for connection to a plumbing pipe, the fitting body being insertable through a support so as to protrude from respective first and second sides thereof, the second end of the plumbing fitting including a biasing member which is engagable with the support when the plumbing fitting is inserted therethrough so as to urge the first end of the plumbing fitting towards the support, whereby a user is able to adjust the extent to which the first end protrudes relative to the support.

According to a third aspect of the invention there is provided a template, for securance to a support, comprising a plumbing fitting location site for receiving a plumbing fitting and positively locating it laterally relative to the support, the plumbing fitting location site including a biasing member which is engagable with a second end of the plumbing fitting when the plumbing fitting is received in the plumbing fitting location site so as to urge a first end of the plumbing fitting towards the template, whereby a user is able to adjust the extent to which the first end protrudes relative to the template.

Various aspects of the present invention are hereinafter described with reference to the accompanying drawings in which:

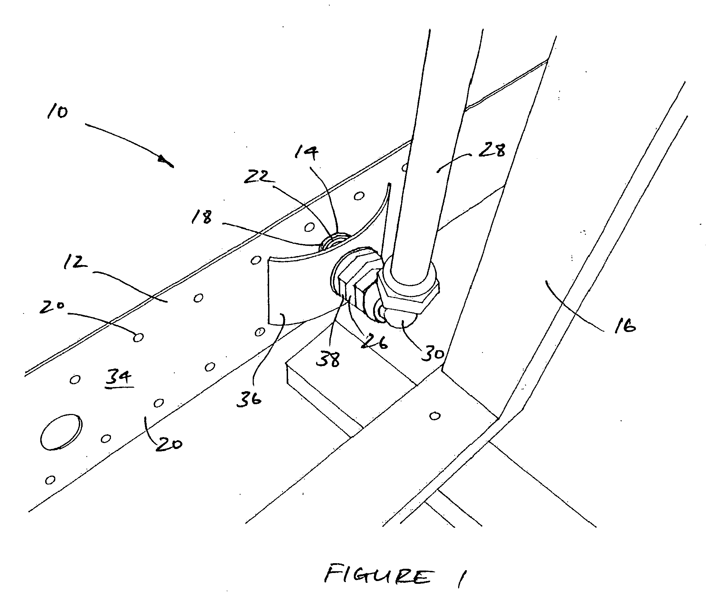

Figure 1 is perspective view from a first side and above of a plumbing apparatus according to a first embodiment of the invention;

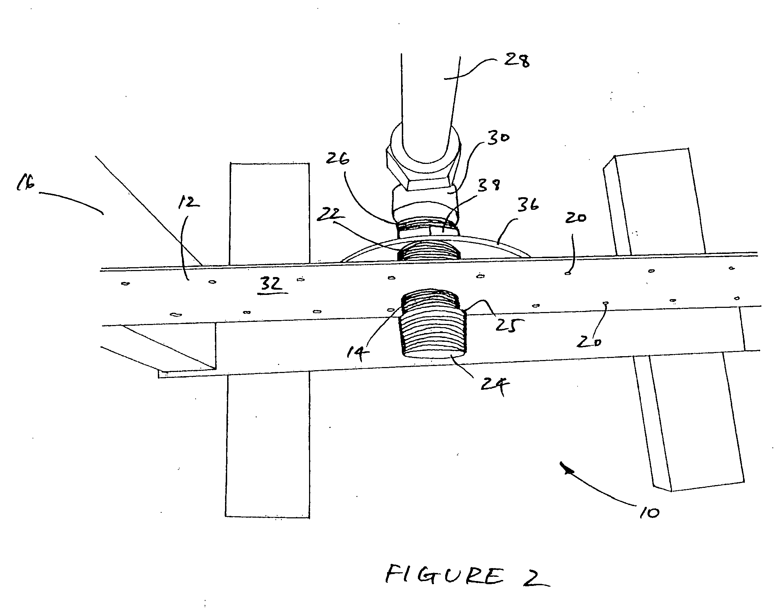

Figure 2 is a perspective view from above of the plumbing apparatus shown in Figure 1; and

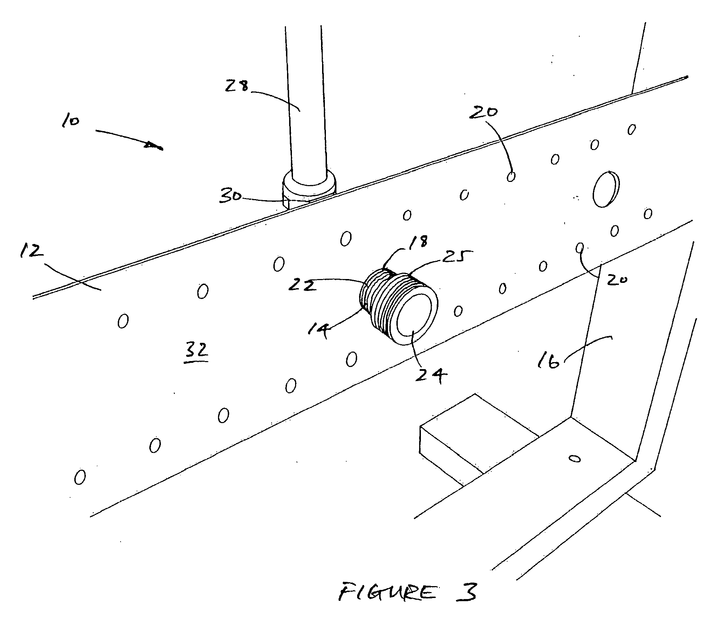

Figure 3 is a perspective view from a second side opposite the first side and above of the plumbing apparatus shown in Figure 1.

A plumbing apparatus according to a first embodiment of the invention is designated by the reference numeral 10.

The plumbing apparatus 10 includes a template 12 and a plumbing fitting 14.

The template 12 is adapted for securance to a support 16 and includes a plumbing fitting location site 18 which locates the plumbing fitting 14 laterally relative to the support 16. Preferably the support 16 is studding which will later form a wall. One way in which a user may secure the template 12 to the support 16 is via respective nails or screws inserted through one of a plurality of first holes 20 in the template 12 and into the support 16.

The plumbing fitting 14 includes a fitting body 22 having a first end 24 which is for connection to a plumbing fixture (not shown) and a second end 26, opposite the first, which is for connection to a plumbing pipe 28. The first end 24 includes a shoulder 25. In addition, the embodiment shown includes an elbow joint 30 interposed between the plumbing fitting 14 and the pipe 28. Other embodiments of the invention may omit the elbow joint 30 and have the pipe 28 connected directly to the second end 26 of the plumbing fitting 14.

The plumbing fitting location site 18 defines an aperture in which the fitting body 22 is insertable so as to protrude from respective first and second sides 32, 34 of the template 12.

In the embodiment shown the second end 26 includes a biasing member 36 which is engagable with the plumbing fitting location site 18. In other embodiments of the invention, the plumbing fitting location site 18 may include a biasing member (not shown) which is engagable with the second end 26 of a plumbing fitting 14 which omits a biasing member (not shown).

The position of the biasing member 36 relative to the second end 26 is adjustable so as to allow for coarse adjustment of the degree to which the first end protrudes relative to the template 12 and support 16. In the embodiment shown, such adjustment is provided for by a collar 38 which is moveable relative to the fitting body 22, and against which the biasing member abuts during use. However, other arrangements which provide the desired adjustment are also possible.

In another preferred embodiment of the invention (not shown) the fitting body 22 has a smooth exterior surface so as to allow the plumbing fitting 14 to move smoothly relative to the template 12.

Each of the first and second ends 24, 26 of the plumbing fitting 14 is threaded. This provides a convenient way of attaching a plumbing fixture or other plumbing connector to the plumbing fitting 14.

The biasing member 36 is formed from a plastics material and has a substantially u-shaped cross-sectional profile. Such a combination provides a convenient way of supplying a desired degree of biasing to the plumbing fitting 14. Other materials and other types of biasing member such as, e.g. a spring, are also possible.

In use, a user inserts a plumbing fitting 14 according to the invention through a template 12 which he has secured to a support 16. The user may also insert the plumbing fitting 14 through the template 12 before securing the template 12 to the support 16.

Alternatively, the user may insert the plumbing fitting 14 directly through a support such as a plasterboard wall (not shown).

In each case, the shoulder 25 at the first end 24 of the plumbing fitting 14 prevents the plumbing fitting 14 passing completely through the template 12/support 16

Accordingly the plumbing fitting 14 is secured in a desired, lateral, position relative to the support 16. In arrangements which include a template 12, the template 12 provides an additional degree of support so as to further inhibit lateral movement of the plumbing fitting 14 relative to the support 16.

Following the covering of the support 16 with a surfacing material (not shown), the user may pull the first end 24 of the plumbing fitting 14 away from the support 16, against the bias imparted by the biasing member 36 so as to position the first end 24 a desired distance from the surface of the support 16, i.e. such that the first end 24 protrudes to a desired extent relative to the surface of the support 16.

In this way the user is able to connect the first end 24 of the plumbing fitting 14 to a plumbing fixture (not shown) with the bias imparted by the biasing member 36 helping to ensure that the plumbing fitting 14 and the pipe 28 connected thereto are restrained in the connected position.

## Claims

1. A plumbing apparatus comprising:
a template adapted for securance to a support; and
a plumbing fitting including a fitting body having a first end for connection to a plumbing fixture and a second end opposite thereto for connection to a plumbing pipe,
the template including a plumbing fitting location site for locating a plumbing fitting laterally relative to the support;
the fitting body being insertable through the plumbing fitting location site so as to protrude from respective first and second sides of the template; and
one of the second end of the plumbing fitting and the plumbing fitting location site including a biasing member which is engagable with the other of the second end of the plumbing fitting and the plumbing fitting location site when the plumbing fitting is inserted in the plumbing fitting location site so as to urge the first end of the plumbing fitting towards the template, whereby a user is able to adjust the extent to which the first end protrudes from the template.

2. A plumbing apparatus according to Claim 1 wherein the position of the biasing member relative to the second end of the fitting is adjustable.

3. A plumbing apparatus according to Claim 1 or Claim 2 wherein the fitting body has a smooth exterior surface.

4. A plumbing apparatus according to any preceding claim wherein at least one of the first or second end of the plumbing fitting is threaded.

5. A plumbing apparatus according to any preceding claim wherein the biasing member has a substantially u-shaped cross-sectional profile.

6. A plumbing fitting comprising a fitting body having a first end for connection to a plumbing fixture and a second end opposite thereto for connection to a plumbing pipe, the fitting body being insertable through a support so as to protrude from respective first and second sides thereof the second end of the plumbing fitting including a biasing member which is engagable with the support when the plumbing fitting is inserted therethrough so as to urge the first end of the plumbing fitting towards the support, whereby a user is able to adjust the extent to which the first end protrudes relative to the support.

7. A template, for securance to a support, comprising a plumbing fitting location site for receiving a plumbing fitting and positively locating it laterally relative to the support, the plumbing fitting location site including a biasing member which is engagable with a second end of the plumbing fitting when the plumbing fitting is received in the plumbing fitting location site so as to urge a first end of the plumbing fitting towards the template, whereby a user is able to adjust the extent to which the first end protrudes relative to the template.
